Europäisches Patentamt

European Patent Office

Office européen des brevets

(19)

(11) Veröffentlichungsnummer: **0 195 179**
**B1**

(12) **EUROPÄISCHE PATENTSCHRIFT·**

(45) Veröffentlichungstag der Patentschrift: **23.05.90**

(51) Int. Cl.⁵: **G 01 N 21/39**

(21) Anmeldenummer: **86100272.3**

(22) Anmeldetag: **10.01.86**

(54) **Prozessphotometer zur kontinuierlichen Messung von Konzentrationen.**

(30) Priorität: **20.03.85 DE 3510052**

(43) Veröffentlichungstag der Anmeldung:
**24.09.86 Patentblatt 86/39**

(45) Bekanntmachung des Hinweises auf die
Patenterteilung:
**23.05.90 Patentblatt 90/21**

(84) Benannte Vertragsstaaten:
**AT BE CH FR GB IT LI NL SE**

(56) Entgegenhaltungen:
**WO-A-82/03687**
**US-A-3 805 074**

**OPTICAL ENGINEERING, Band 23, Nr. 1, Januar-Februar 1984, Seiten 88-91, Bellingham, Washington, US; P. POKROWSKY et al.: "Sensitive detection of hydrogen chloride by derivative spectroscopy with a diode laser"**

(73) Patentinhaber: **KERNFORSCHUNGSZENTRUM KARLSRUHE GMBH**
**Weberstrasse 5 Postfach 3640**
**D-7500 Karlsruhe 1 (DE)**

(72) Erfinder: **Breton, Heimo, Dr.**
**Teichäckerweg 23**
**D-7513 Stutensee-Spöck (DE)**
Erfinder: **Krieg, Gunther, Prof. Dr.**
**Im Rennich 12**
**D-7500 Karlruhe 41 (DE)**

(56) References cited:
**APPLIED OPTICS, Band 21, Nr. 7, April 1982, Seiten 1185-1190, New York, US; D.T. CASSIDY et al.: "Atmospheric pressure monitoring of trace gases using tunable diode lasers"**

**JAPANESE JOURNAL OF APPLIED PHYSICS, Band 22, Nr. 10, Oktober 1983, Teil 1, Seiten 1553-1557, Tokyo, JP; M. OHTSU et al.: "Spectral measurements of NH3 and H20 for pollutant gas monitoring by 1.5 pm InGaAsP/InP lasers"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 195 179 B1

Courier Press, Leamington Spa, England.

**EP 0 195 179 B1**

56) References cited:

JOURNAL OF LIGHTWAVE TECHNOLOGY, LT-2, Nr. 3, Juni 1984, Seiten 234-237, New York, US; K. CHAN et al.: "An optical-fiber-based gas sensor for remote absorption measurement of low-level CH4 gas in the near-infrared region"

SOVIET JOURNAL OF QUANTUM ELECTRONICS, Band 12, Nr. 4, April 1982, Seiten 518-520, New York, US; YU.V. KOSICHKIN et al.: "Improvement in the precision of a high-resolution spectrometer based on diode lasers by stabilization of reference-line scanning cycles"

**Beschreibung**

Die Erfindung betrifft ein Prozeßphotometer zur kontinuierlichen Messung der Konzentrationen von infrarotaktiven Gasen nach dem Oberbegriff des Patentanspruchs.

Für die Überwachung z.B. des HF-Gehaltes in wasserdampfhaltigen Abgasen gemäß TA-Luft ist derzeit nur ein auf naßchemischer Basis arbeitendes System erhältlich. Systeme dieser Bauart weisen jedoch gegenüber physikalischen Meßsystemen die Nachteile längerer Ansprechzeit und höheren Wartungsaufwandes auf, so daß ihr Einsatz in der Prozeßmeßtechnik sowie zur schnellen Störfallmeldung bei der Abgaskontrolle nicht oder nur mit Einschränkungen möglich ist.

Messungen der HF-Konzentration in wasserdampfhaltigen Gasen sind allerdings auch bereits mit hoher Empfindlichkeit durchführbar, wenn als Strahlungsquelle ein HF-Laser verwendet wird. Dieses Verfahren ist jedoch mit großen Investitionskosten (Frequenzstabilisierung) verbünden und ist außerdem sehr personalintensiv und demzufolge für die Prozeßmeßtechnik nicht einsetzbar.

In der Umkehrung des Prinzips der selektiven Lichtquelle existieren Photometer, welche mit selektiven Detektoren ausgerüstet sind. Hierbei wird der Detektor mit der zu bestimmenden Gaskomponente gefüllt und zur Detektion der IR-Strahlung der optoakustische Effekt ausgenutzt. Dieses Verfahren versagt jedoch bei Gasen, die wie HF stark korrosiv sind und ausgeprägte Oberflächen-Adsorptionseigenschaften aufweisen.

Es sind auch bereits Diodenlaser für den Bereich des Nahen Infrarot (um 0, 8μm bzw. um 1, 3μm) sowie Bleisalz-Laser für den Bereich des Mittleren Infrarot (oberhalb etwa 3μm) verfügbar (vgl. OPTICAL ENGINEERING, Bd 23, Nr 1, Jan — Feb 1989, S88—91). Der wirtschaftliche Einsatz von Bleisalz-Lasern ist durch den hohen Aufwand zur Frequenz- und Leistungsstabilisierung bzw. zur Kühlung nicht möglich. Die Diodenlaser dahingegen sind speziell für die optische Nachrichtenübertragung entwickelt worden.

Die der Erfindung zugrundeliegende Aufgabe bestand darin, ein Prozeßphotometer der eingangs genannten Art derart auszuführen, daß ein zur Prozeßsteuerung geeignetes physikalisches HF-Meßsystem zur Verfügung steht, mit dem z.B. der HF produzierenden Industrie eine Verbesserung der Produktqualität und der Betriebssicherheit der Anlagen und die Messung der HF-Emissionen in Müllverbrennungsanlagen gemäß TA-Luft ermöglicht wird.

Die Lösung ist in den Merkmalen des Patentanspruchs beschrieben.

Zur kontinuierlichen Überwachung von wasserdampfhaltigen HF-Emissionen an einer Flußsäure-Produktionsanlage wurde demnach ein Verfahren und ein Prozeßphotometer entwickelt, welches die Absorption des 0-2 Schwingungsüberganges des HF-Moleküls ausnutzt. Durch Einsatz von Laserdioden als Strahlungsquelle ist eine zu Wasser querempfindlichkeitsfreie Messung der HF-Konzentration möglich. Damit ist das Ziel erreicht ein automatisiertes, prozeßfähiges Meßgerät mit einer Nachweisgrenze im unteren ppm-Bereich zu erhalten.

Im erfindungsgemäßen Einsatz als Emissions-Meßsystem bestehen gegenüber dem herkömmlichen — auf naßchemischer Basis arbeitenden — System — deutliche technische Vorteile, bei etwa gleichem Systempreis. Hierbei ist aufgrund der Schnelligkeit des Meßsystems eine Verhinderung von Schäden in und außerhalb der Anlage möglich. In diesem Zusammenhang spielen neben einer Anwendung in den o.g. Industriezweigen insbesondere z.B. Aluminiumhütten und Ziegeleien auch Anwendungen bei der Herstellung integrierter elektronischer Schaltkreise eine Rolle.

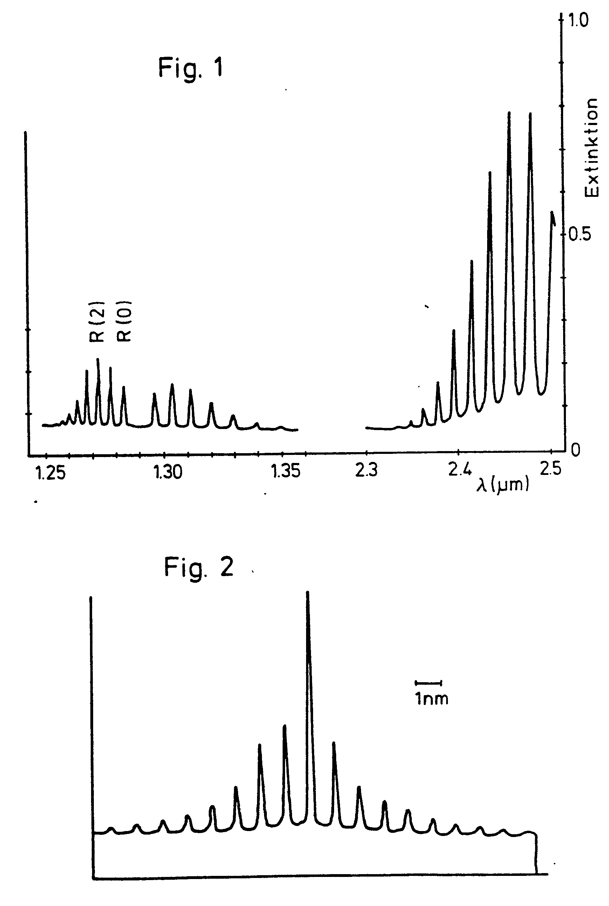

Die Erfindung wird im folgenden anhand eines Ausführungsbeispiels für das Prozeßphotometer mittels der Fig. 1—6 näher erläutert.

Als lineares Molekül weist HF eine einzige Normalschwingung auf, deren optische Anregung (0—1) bei 2, 5μm erfolgt. Wegen der reinen Linienstruktur des Spektrums (Fig. 1) sind die mit herkömmlichen Filterphotometern erreichbaren Empfindlichkeiten für Messungen im ppm-Bereich zu gering, darüber hinaus treten starke Querempfindlichkeiten zu Wasserdampf auf. Messungen mit Gasfilter-Korrelationstechnik sind wegen der starken Absorptions- und Desorptionseinflüsse des HF an Oberflächen nicht möglich.

Die 1.0berschwingung der HF-Absorption liegt bei 1, 3μm und überlappt hier im Gegensatz zu der HF-Grundschwingung bei 2, 4μm nicht mit den entsprechenden Absorptionsbanden von $H_2O$. Ferner ist der Absorptionskoeffizient der 1.Oberschwingung nur um etwa den Faktor 8 kleiner als der Grundschwingung. Es ist daher möglich, als Strahlungsquelle die für die optische Nachrichtenübertragung erhältlichen 1, 3μm-Diodenlaser (Laseremissionsfrequenz 1284 nm) einzusetzen, so daß wegen der hohen Selektivität dieser Strahler prinzipiell höhere Empfindlichkeiten erzielt werden als bei Photometern mit konventionellen Lichtquellen, die im HF-Absorptionsbereich bei 2, 4μm arbeiten (letztere sind — wie bereits erwähnt — zudem wegen ihrer Querempfindliclhkeit zu Wasser nur in $H_2O$-freier Atmosphäre als HF-Meßsystem geeignet).

Die Halbleiterlaser (z.B. InGaAsP/InP) zeigen im allgemeinen ein Multimode-Emissionsspektrum (Fig.2), welches durch geeignete Wahl der Parameter so beeinflußt werden kann, daß die Maximalintensität nur in einem Mode auftritt und die übrigen Emissionsfrequenzen weitgehend unterdrückt werden. Durch Wahl der Betriebstemperatur des Lasers (ca. 20°C bis + 40°C) läßt sich der Laser in einem engen Bereich (ca. 20—30 nm) abstimmen und mit einer Linie des HF-Rotations-Schwingungsspektrums zur Deckung bringen. Durch Abscannen einer HF-Absorptionslinie und Bestimmung des Linienintegrals bzw. der Maximalextinktion kann die HF-Konzentration in einem Gasgemisch bestimmt werden. Wegen des im Vergleich zur Grundschwingung etwa um den Faktor 8 kleineren Extinktionskoeffizienten der Oberschwingung erfüllen diese Verfahren jedoch noch nicht ausreichend die Anforderungen an die zu erreichende Meßgenauigkeit.

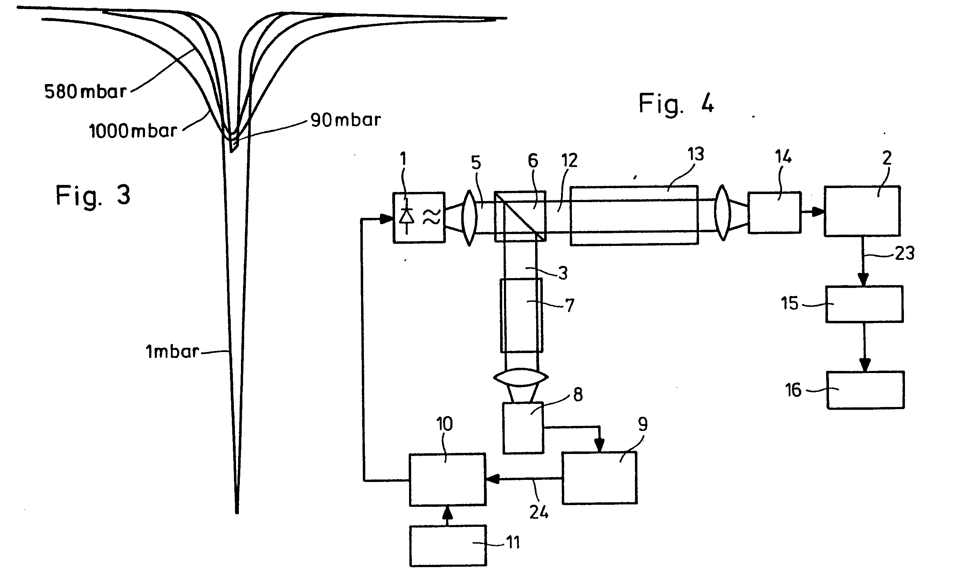

Zur Erlangung höchster Signal-/Rausch-Verhältnisse wird daher bei der Messung mit den Laserdioden die sog. Derivatspektroskopie eingesetzt. Hierbei wird die Laserdiode 1 (s.Fig.4) mit einem der Gleichstromkomponente überlagerten Wechselstrom betrieben. Somit wird nicht nur die Ausgangsleistung des Lasers 1 moduliert, sondern auch die Ausgangsfrequenz (Wellenlänge). Wird beim Abscannen der Absorptionslinie das Lasersignal über einen Lock-In-Verstärker 2 detektiert, welcher auf die Modulationsfrequenz f lockt, so wird ein Signal erhalten, welches der 1.Ableitung der Absorptionslinie entspricht. Erfolgt die Detektion auf der doppelten Modulationsfrequenz (2f), so wird die 2. Ableitung der Absorptionslinie erhalten. Der Vorteil dieses Meßverfahrens liegt in der drastischen Reduzierung des Signalrauschens, so daß mit Meßanordnungen dieser Art Extinktionen von $10^{-5}$ nachweisbar sind. Meßsignale dieser Größenordnung werden mit dem HF-Laserdiodenphotometer ebenfalls erfaßt.

Ursache für die hohe geforderte Meßgenauigkeit ist, daß die bei reinem HF relativ starken Absorptionslinien im Gasgemisch durch Fremdgasdruckverbreiterung in ihrer Intensität stark abnehmen (um etwa den Faktor 4), dafür aber breiter werden (Fig. 3). Wegen des schlechten Signal-/Rauschverhältnisses an den Flanken der Absorptionsbande sind diese Druckverbreiterungseffekte bei der Hochauflösungsspektroskopie störend. Durch Abpumpen des Gemischdruckkes auf Drücke unter 100 mbar kann die Linienbreite jedoch auf Werte reduziert werden, die unterhalb der natürlichen Linienbreite des reinen Gases liegen, ohne daß die Linienintensität abnimmt (Sättigungsspektroskopie). Die Extinktion im Absorptionsmaximum ist dann druckunabhängig und der Konzentration des zu messenden Gases im Gemisch direkt proportional (Gültigkeit des Lambert-Beerschen Gesetzes: Ext = C.1.Konz (C= Konstante, 1 = optische Wegelänge)). Wird der Laser 1 auf das Absorptionsmaximum abgestimmt, so wird aus dem 2f-Signal direkt die Konzentration ermittelt. Das Abstimmen auf Linienmitte kann durch Auskoppeln (Strahlteiler 6) eines Teils (Referenzstrahl 3, s.Fig. 4) der Laserstrahlung 5 erfolgen, welcher eine Referenzküvette 7 durchstrahlt, die das zu messende Gas in definierter Konzentration enthält, und dann auf einen 2.Detektor 8 trifft. Hier kann das im Lock-In-Verstärker 9 gebildete Signal 24 der 1.Ableitung im Nulldurchgang zur exakten Wellenlängenjustierung 10 (Laserstrom, Temperatur) des Laser 1 benutzt werden. Der Sinus-Generatur 11 erzeugt die Laserstrahlfrequenz f.

Der Meßstrahl 12 durchläuft die Meßzelle 13 und trifft als Extinktionssignal auf den 1.Detektor 14, dessen Ausgangssignal — wie bereits beschrieben — im Lock-In-Verstärker 2 zur 2.Ableitung 2f verarbeitet wird. Dessen Ausgangssignal 23 kommt auf den Rechner 15, der den Meßwert 16 (Konzentration) berechnet.

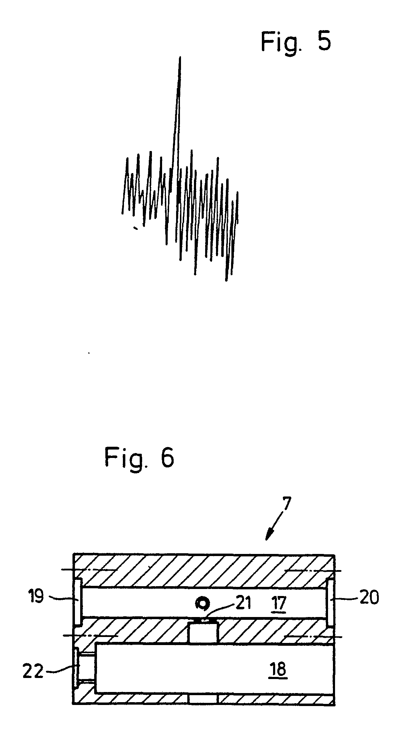

Messungen wurden mit einer Anordnung durchgeführt, bei der der Laser 1 jeweils über die HF-Absorptionslinie durch Temperaturvariation abgestimmt wurde. Die Anordnung entsprach in etwa der in Fig. 4 gezeigten. Der zugehörige Detektor 8 wurde zur Leistungsregelung der Laserdiode 1 verwendet. Es wurden Halbleiterlaser eingesetzt, die auf die Übergänge R(0)-R(2) des 0 — 2 Überganges des HF-Moleküls abgestimmt sind. Für die HF-Messung in der Meßzelle 13 wurde Luft bei Raumtemperatur durch etwa 4 ige Flußsäure geleitet und im Unterdruck (ca. 100 mbar) durch die Meßzelle 13 (1 = 100 cm) gesaugt. Ein typisches Meßsignal ist in Fig. 5 dargestellt. Der hohe Untergrund ist im wesentlichen durch optische Interferenzen im Strahlengang (insbesondere am Strahlteiler 6) verursacht.

Zur Vermeidung von Strahlinterferenzen erfolgt vorzugsweise die Verwendung von Laserdioden 1 mit integrierter Monitordiode und Kühlsystem. Die Auskopplung der Strahlung 5 erfolgt über Lichtleiteranschluß (Pigtail). Die Strahlteilung 6 in Meß- und Referenzzweig 12, 3 wird über ein Lichtleiter-Verzweiger-Modul (Aufteilungsverhältnis 1:1) mit Lichtleiteranschlüssen vorgenommen, während die Kopplung von Laser 1 und Verzweiger 6 über eine Lichtleiter-Steckverbindung und die Auskopplung der Laserstrahlen 12, 3 aus Verzweiger-Kabeln über Selfoc-Linsen zur Erzeugung jeweils eines parallelen Lichtbündels erfolgt. wobei die Selfoc-Linsen antireflexbeschichtet sind.

Zur Stabilisierung der Lock-In-Verstärke 2, 9 wird folgendes durchgeführt:

Die optimale Modulationsfrequenz für den Laser 1 liegt im Bereich 10 KHz. Die Lock-In-Verstärker 2, 9 können daher auf eine einzige Frequenz f bzw. 2f optimiert werden.Als Meßsignal ist ein Vektorausgang vorzuziehen (phasenunabhängige Messung). Für den Referenzkanal (1f-Detektion) muß das um 90° phasenverschobene Signal erfaßt werden (Nulldurchgangsmessung). Beide Lock-In-Verstärker 2, 9 sind mit Offset-Kompensation versehen (dies ist evtl. auch in der Meßwertverarbeitungselektronik (Mikroprozessor) möglich). Die Verstärker 2, 9 sind in einem thermostatisierten Meßschrank eingebaut.

Zur Stabilisierung des Lasersignals werden folgende Maßnahmen durchgeführt:

Einen nicht zu vernachlässigenden Einfluß auf die Stabilität der Lock-In-Signale übt die Stabilität des detektierten Lasersignales aus. Hierbei sind berücksichtigt:

Stabilität der Leistungsregelung des Lasers 1

Stabilität der Empfängerdioden (Detektoren 8, 14).

Üblicherweise wird die Leistungsregelung der Laserdiode 1 über das Signal der in das Lasergehäuse integrierten Monitordiode angesteuert. Es ist jedoch möglich, daß mit dieser Methode, insbesondere bei Variation der Lasertemperatur, keine ausreichende Stabilität erzielt wird. Alternativ hierzu erfolgt eine Leistungssteuerung über das Ausgangssignal des Meßdetektors 14 (unter Umgehung des Lock-In-Verstärkers 2) ohne Emp-

findlichkeitseinbußen für das Meßsignal. Dieses Verfahren bietet den Vorteil, daß sich Änderungen der optischen Transmissionseigenschaften im gesamten Meßzweig nicht im Lock-In-Verstärker 2 auswirken. Dies ist insbesondere dann wichtig, wenn die Monitordiode andere Modenanteile der Laserstrahlung detektiert als die Meßdetektoren 8, 14. Die Leistungsregelung der Laserdiode 1 muß sich sowohl auf die DC-Leistung als auch auf die AC-Leistung beziehen, so daß immer ein konstanter Modulationsgrad der Laserstrahlung gewährleistet ist.

Die Stabilisierung der Empfängerdioden in den Detektoren 8, 14 erfolgt durch Temperaturstabilisierung mittels Peltier-Systemen.

Zur Auslegung der Referenzzelle:

Frühere Versuche zur Messung von HF mit der Gasfilterkorrelationstechnik haben gezeigt, daß es praktisch nicht möglich ist, gasförmiges HF über längere Zeiträume in einer Küvette bei konstantem Druck zu halten. Die Ursache hierfür liegt insbesondere in Wandreaktionen des HF und möglicherweise auch an durch Korrosion verursachten Undichtigkeiten. Da insbesondere Wandreaktionen auch bei der im Laserdiodenphotometer eingesetzten Referenzzelle 7 nicht auszuschließen sind, müssen über ein HF-Reservoir Verluste ausgeglichen werden. Eingesetzt wird die in Fig. 6 im Schnitt gezeigte Zelle 7, die im wesentlichen ein beheiztes Zwei-Kammersystem 17, 18 darstellt. Der obere Teil bildet die eigentliche Küvette 17, die an den Stirnseiten mit Fenstern 19, 20 (CaF$_2$) vakuumdicht verschlossen ist. Die untere (Vorrats-)Kammer 18, die mit der Küvette 17 über eine Fritte 21 gasdurchlässig verbunden ist, besitzt nur eine vakuumdichte Einfüllöffnung 22. Das Gassystem kann über ein Edelstahl-Absperrventil evakuiert werden. Die Vorratskammer 18 wird mit einem Material gefüllt, welches bei Erhitzen HF abspaltet, dessen Partialdruck von der Temperatur abhängt. Hierfür eignen sich Natriumhydrogenfluorid (NaHF$_2$); Ammoniumhydrogenfluorid (NH$_4$HF$_2$), oder Kaliumhydrogenfluorid KHF$_2$). HF-Verluste in der Küvette 17 werden somit aus dem Vorratsbehälter 18 ersetzt; Wartungsintervalle (Nachfüllen der ~Vorratskammer 18 und anschließendes Evakuieren) verlängert.

Zur Steuerung des Photometers:

Voraussetzung für den Betrieb des Photometers ist die Kenntnis der Betriebsbedingungen des Lasers 1, bei der die HF-Absorption gemessen werden kann. Diese müssen für jeden Laser 1 experimentell ermittelt werden. Die automatische Steuerung wird wie folgt aufgebaut:

Regelung der Lasertemperatur über zwei getrennte Peltierelemente. Grobregelung über extern am Lasergehäuse angebrachtes Peltierelement, Feinregelung über integrierte Thermosäule.

AC- und DC-Leistung des Lasers 1 sind fest vorgegeben.

Anfahren der optimalen Betriebstemperatur über externes Element mit relativ großer Zeitkonstante. Diese Temperatur bleibt konstant.

Abscannen eines vorgegebenen Wellenlängenbereiches über die Temperaturfeinregelung zum Auffinden der Linienmitte (Nulldurchgang bei 1.Ableitung).

Übernahme der Frequenzregelung durch Referenzzweig 3, 7—10.

Zu einem geeigneten Zeitpunkt muß beim Abscannen die Offset-Korrektur der Lock-In-Verstärker 2, 9 erfolgen. In vorgegebenen Abständen ist diese Maßnahme zu wiederholen. Dies kann z.B. über eine definierte Verstimmung der Laserfrequenz aus der HF-Absorption heraus und anschließende Abstimmung auf Linienmitte erfolgen.

**Patentanspruch**

1. Prozeßphotometer zur kontinuierlichen Messung von infrarotaktiven Gasen in störkomponentenhaltigen Prozeßmedien mit einem Strahlteiler (6), einen Meßstrahlengang (12) und einem Referenzstrahlengang (3), bei dem ein Single-Mode-Diodenlaser, welcher mit Hilfe eines Lock-In-Verstärkers (9) über die erste Ableitung einer Absorptionslinie des zu untersuchenden Moleküls abstimmbar und stabilisierbar ist, als Strahlungsquelle dient und bei dem die Konzentrationsbestimmung des zu messenden Gases im Meßstrahlengang (12) über die doppelte Modulationsfrequenz mit einem weiteren Lock-In-Verstärker (2) und der dadurch erhaltenenen 2. Ableitung einer Gasabsorptionslinie erfolgt, dadurch gekennzeichnet, daß im Referenzstrahlengang (7) ein Zweikammersystem (17, 18) vorgesehen ist, wobei in der einen Kammer (17) die Referenzmessung erfolgt und in der anderen Kammer (18) ein Referenzgasvorrat, z.B. HF, enthalten ist, mit dem die Referenzgasverluste in der einen Kammer (17) ausgleichbar sind, und daß eine Fritte (21) zwischen den beiden Kammern (17, 18) angeordnet ist.

**Revendication**

1. Photomètre de procédé en vue de la mesure en continu de gaz actifs en infrarouge dans des milieux contenant des composants gênants au moyen d'un diviseur de rayons (6), un parcours du rayon de mesure (12) et un parcours du rayon de référence (3), dans lequel un laser à diodes à mode unique est réglable et déterminable par l'intermédiaire de la première dérivation d'une ligne d'absorption, sert comme source de rayonnement et dans lequel la détermination de la concentration du gaz à mesurer s'effectue dans le parcours du rayon de mesure (12) par l'intermédiaire de la fréquence double de modulation avec un amplificateur supplémentaire (2) du type Lock-In et la seconde dérivation obtenue ainsi d'une ligne d'absorption du gaz, caractérisé en ce que dans le parcours du rayon de référence (7), un système de deux chambres (17) (18) est prévu pour lequel dans une chambre (17) la mesure de référence s'effectue et dans l'autre chambre (18) une alimentation en gaz de référence, par exemple de l'acide fluorhydrique FH, est contenue avec laquelle les pertes en gaz de référence dans les premières chambres peuvent être compensées et qu'un matériau fritté est disposé entre les deux chambres (17) et (18).

**Claim**

1. Process photometer for the continuous measurement of infra-red-active gases in process media containing interference components, including a beam splitter (6), a measuring beam (12) and a reference beam (3), wherein a single-mode diode laser, which is adjustable and stabilisable by means of a lock-in amplifier (9) via the intermediary of the first deflection of an absorption line of the molecule to be investigated, serves as a source of radiation, and wherein the concentration of the gas which is to be measured in the measuring beam (12), plotted against twice the modulation frequency, is determined by means of an additional lock-in amplifier (2) and the second deflection of a gas absorption line obtained thereby, characterised in that a two-chamber system (17, 18) is provided in the reference beam (7), the reference measurement being effected in one chamber (17) and a reservoir for reference gas, e.g. HF, being contained in the other chamber (18), whereby the losses of reference gas in one chamber (17) are adjustable, and in that a frit (21) is disposed between the two chambers (17, 18).

Fig. 1

Fig. 2

Fig. 4

Fig. 3

580 mbar
1000 mbar
90 mbar
1 mbar

Fig. 5

Fig. 6